# EUROPÄISCHE PATENTSCHRIFT

(11) **EP 0 361 396 B1**
(45) Veröffentlichungstag und Bekanntmachung des Hinweises auf die Patenterteilung: **18.08.1993**
(21) Anmeldenummer: 89117759.4
(22) Anmeldetag: 26.09.1989
(51) Int. Cl.: B22F 9/08, C22C 45/00

(54) **Verfahren und Vorrichtung zum Herstellen eines Pulvers von amorphen Partikeln einer keramischen oder metallischen Substanz**
Process and apparatus for preparing an amorphous powder of a ceramic or metallic material
Procédé et installation de préparation d'une poudre amorphe d'une matière céramique ou métallique

(30) Priorität: 27.09.1988 LU 87346
(43) Veröffentlichungstag der Anmeldung: 04.04.1990
(73) Patentinhaber: EUROPÄISCHE ATOMGEMEINSCHAFT (EURATOM), L-2920 Luxembourg (LU)
(72) Erfinder: Hiernaut, Jean-Pol, D-7515 Linkenheim (DE); Werner, Paul, D-7521 Dettenheim (DE)
(74) Vertreter: Weinmiller, Jürgen

(56) Entgegenhaltungen:
- DE-A- 3 150 221
- GB-A- 1 084 908
- US-A- 4 035 116
- US-A- 4 553 917
- US-A- 4 723 994
- SCIENCE, Band 243, 1989; E.H.BRANDT: "Levitation in Physics" Seiten 349-355

## Beschreibung

Die Erfindung bezieht sich auf ein Verfahren und eine Vorrichtung zum Herstellen eines Pulvers von amorphen Partikeln einer keramischen oder metallischen Substanz in einem Hochdruck-Autoklaven, in dem die in flüssiger Form eingebrachte Substanz rasch abgekühlt wird.

Amorphe Metallegierungen, auch metallische Gläser genannt, sind seit etwa 20 Jahren bekannt. Man versteht darunter einen nicht kristallin erstarrten Festkörper, der eine ungeordnete Struktur besitzt, die durch Abkühlen einer Schmelze erreicht wird. Dabei erfolgt die Abkühlung mit großer Geschwindigkeit auf einen Temperaturwert, bei dem keine Kristallisation mehr möglich ist.

Solche amorphe Substanzen zeigen neue mechanische, elektrische und chemische Eigenschaften, die von den entsprechenden kristallisierten Varianten nicht erreicht werden.

Entscheidend für die Herstellung solcher amorpher Substanzen ist die hohe Abkühlgeschwindigkeit des schmelzflüssigen Materials. So ist ein Verfahren bekannt, in dem das Schmelzgut aus einem induktiv erhitzten Schmelztiegel auf den Umfang einer sich um eine horizontale Achse drehenden Kupferscheibe mit Bandabstreifer fließt. Es ist auch möglich, das Schmelzgut zwischen zwei um horizontale Achsen drehende schmale Kupferscheiben einzuführen oder auf die Scheibenfläche einer um ihre senkrechte Achse drehenden Kühlscheibe aufzubringen. Schließlich wurde auch bereits vorgeschlagen, einen schmelzflüssigen Tropfen zwischen zwei aufeinander zu bewegten Kühlstempeln zu zerdrücken und damit rasch abzukühlen. Die dabei entstehenden dünnen Plättchen unterschiedlicher Form werden dann mechanisch zerkleinert, um in eine der Form des gewünschten Werkstücks entsprechende Form gepreßt und gesintert zu werden.

Aufgabe der Erfindung ist es, ein Verfahren und eine Vorrichtung anzugeben, durch die unmittelbar amorphe Pulverpartikel einer begrenzten Teilchengröße hergestellt werden können, die somit nicht mehr mechanisch zerkleinert werden müssen, ehe sie mit den bekannten Mitteln der Pulvertechnologie weiterverarbeitet werden können.

Diese Aufgabe wird durch das Verfahren gemäß Anspruch 1 bzw. die Vorrichtung gemäß Anspruch 2 gelöst.

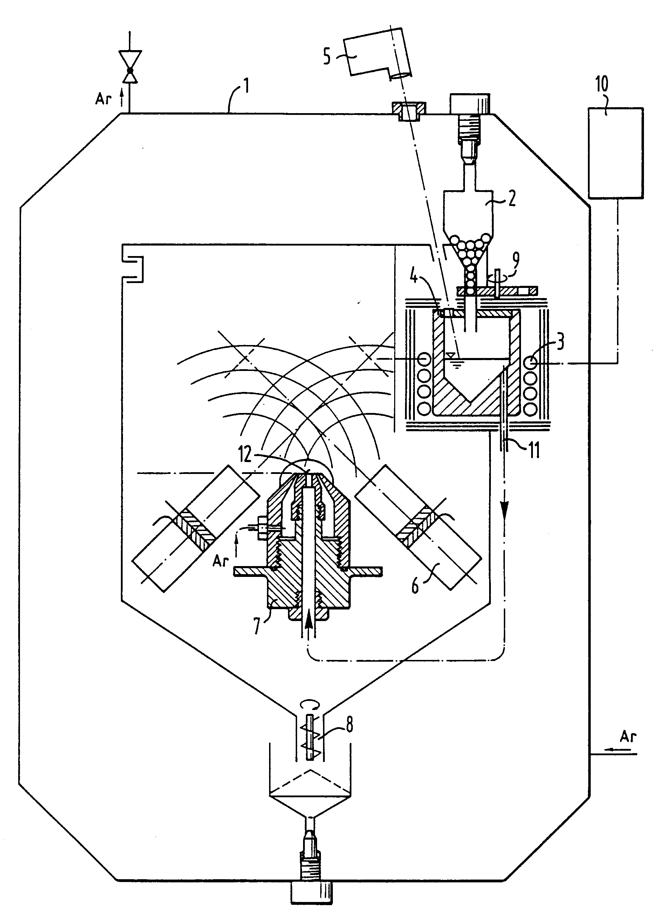

Nachfolgend wird die Erfindung anhand eines bevorzugten Ausführungsbeispiels mit Hilfe der einzigen Figur näher erläutert, die schematisch eine erfindungsgemäße Vorrichtung zeigt.

Die Vorrichtung befindet sich in einem Hochdruck-Autoklaven 1, der mit Argon von z.B. 140 Bar gefüllt ist. In diesem Autoklaven befindet sich ein Kugelbehälter 2 mit Kugeln oder anders geformten Rohlingen der Substanz, deren amorphes Pulver hergestellt werden soll. Der Kugelbehälter steht über eine gesteuerte Zufuhrsperre 9 mit einem Schmelztiegel 4 in Verbindung, der über eine Hochfrequenz-Induktionspule 3 auf eine Temperatur aufgeheizt wird, bei der die Kugeln schmelzen. Mit einem Pyrometer 5, das durch ein Fenster im Schmelztiegel auf die Schmelze gerichtet ist, wird die Temperatur der Schmelze gemessen und bei Bedarf durch Veränderung der Heizleistung des die Induktionswicklung 3 speisenden Hochfrequenzgenerators 10 verändert. Die Kugelzufuhr wird so geregelt, daß der Flüssigkeitsspiegel stets in etwa konstant bleibt. Der Schmelztiegel steht über eine thermisch abgeschirmte Leitung 11 mit einer Sprühdüse 7 in Verbindung, deren Mündung 12 senkrecht nach oben gerichtet ist. Die Schmelze wird durch die Düse entweder aufgrund des Höhenunterschieds zwischen dem Schmelztiegel 4 und der Düsenmündung 12 oder aufgrund eines oberhalb der Schmelze im Tiegel 4 herrschenden Gasdrucks durch die Mündung 12 gepreßt. Zugleich wird ein Inertgas wie Argon durch um die Düsenmündung 12 herum angeordnete Öffnungen in der Düse ausgestoßen, wodurch die Bildung eines fein verteilten Nebels von Tröpfchen der Schmelzsubstanz vor der Mündung 12 gefördert wird.

Zwei oder mehr Schallsender 6 sind auf den Bereich vor der Mündung 12 der Düse ausgerichtet und erzeugen durch elektrische Anregung von piezoelektrischen Plättchen ein akustisches Levitationsfeld in Form eines räumlichen Interferenzmusters, durch das die aus der Mündung 12 der Düse 7 austretenden Tröpfchen eine Zeitlang in diesem Bereich in der Schwebe bleiben, bis sie erstarrt sind. Durch dieses Levitationsfeld werden nicht nur die Partikel in der Schwebe gehalten, sondern auch Gaspartikel im unmittelbaren Grenzschichtbereich um die schmelzflüssigen Tröpfchen herum beschleunigt, was den Tröpfchen sehr wirksam Wärme entzieht. Damit dieser Abkühlungsprozeß möglichst schnell abläuft, wird eine turbulente Strömung eines inerten Kühlgases, z.B. Argon, erzeugt, durch die die sich verfestigenden feinen Partikel aus dem Levitationsfeld weggeschleudert werden. Ein die Düse 7 und den Levitationsbereich umgebender Fangtrichter mündet an seinem tiefsten Punkt in einer Pulverabführschnecke 8, über die das amorphe Pulver ebenso kontinuierlich, wie es hergestellt wurde, abgeführt wird. Das Pulver hat eine Korngröße zwischen 20 und 50 µm und eignet sich somit unmittelbar für die pulvertechnologische Weiterverarbeitung. Die erreichte Abkühlgeschwindigkeit von etwa 10⁵ Ks⁻¹ reicht bei den meisten interessierenden Substanzen aus, um die Kristallisation zu verhindern.

## Patentansprüche

1. Verfahren zum Herstellen eines Pulvers von amorphen Partikeln einer keramischen oder metallischen Substanz in einem Hochdruck-Autoklaven, in dem die in schmelzflüssiger Form eingebrachte Substanz rasch abgekühlt wird, dadurch **gekennzeichnet**, daß die Substanz in schmelzflüssiger Form aus einer Düse in senkrechter Richtung nach oben hinausgepreßt wird, daß auf den Bereich vor der Düsenmündung ein akustisches Levitationsfeld einwirkt, und daß ein Inertkühlgas in diesem Bereich in eine turbulente Strömung versetzt wird, so daß die aus der Düse herausgesprühten Tröpfchen rasch abgekühlt werden und sich zu Körnern verfestigen.

2. Vorrichtung zur Durchführung des Verfahrens nach Anspruch 1, dadurch gekennzeichnet, daß sich in dem Autoklaven (1) ein beheizter Schmelztiegel (4) befindet, der mit Mitteln (2, 9) zur Zufuhr von Rohlingen der Substanz zusammenwirkt, daß eine Leitung (11) den Schmelztiegel (4) mit einer Sprühdüse (7) verbindet, deren Mündung (12) nach oben gerichtet ist, daß ein Levitationsschallsender (6) so angeordnet ist, daß er ein Levitationsschallfeld im Bereich vor der Düsenmündung erzeugt, und daß Mittel zum Einblasen eines inerten Kühlgases in diesen Bereich vorgesehen sind, durch die dort eine turbulente Gasströmung entsteht.

## Claims

1. A method for manufacturing a powder of amorphous ceramic or metallic particles in a high pressure autoclave, in which the substance in the liquid state is rapidly cooled down, characterized in that the substance in the liquid state is projected out of a nozzle upwards in vertical direction, that an acoustic levitation field acts on the area in front of the nozzle orifice, and that an inert cooling gas is made to flow turbulently in this area, so that the droplets sprayed out of the nozzle are rapidly cooled and get solidified to grains.

2. A device for implementing the method according to claim 1, characterized in that a heated melting crucible (4) is situated in the autoclave (1), which crucible cooperates with means (2, 9) for feeding preforms of the substance, that a duct (11) connects the melting crucible (4) with a spray nozzle (7), whose orifice (12) is directed upwards, that a levitation acoustic emitter (6) is disposed in such a way that it creates a levitation acoustic field in the area in front of the nozzle orifice, and that means for injecting an inert cooling gas into this area are provided, by which a turbulent gas flow is created there.

## Revendications

1. Procédé pour la fabrication d'une poudre de particules amorphes en une substance céramique ou métallique contenue dans un autoclave haute pression, dans lequel la substance est introduite en forme fondue et se refroidit rapidement, caractérisé par le fait que la substance est éjectée sous forme de fonte liquide d'une buse en direction verticale vers le haut, qu'on fait agir sur la zone en face de l'embouchure de la buse un champ acoustique de lévitation et qu'on crée un écoulement turbulent d'un gaz de refroidissement inerte dans cette zone permettant de refroidir rapidement les gouttelettes éjectées de la buse, ces gouttelettes se solidifiant alors en devenant des grains.

2. Dispositif pour la mise en oeuvre du procédé selon la revendication 1, caractérisé en ce qu'on prévoit dans l'autoclave (1) un creuset chauffé (4) coopérant avec des moyens (2, 9) d'alimentation en préformes de ladite substance, qu'un conduit (11) relie le creuset (4) avec une buse d'éjection (7) dont l'embouchure (12) est dirigée vers le haut, qu'un émetteur acoustique de lévitation (6) est disposé de sorte que l'on produise un champ sonore de lévitation dans la zone en face de l'embouchure de la buse, et qu'on prévoit des moyens pour injecter un gaz inerte de refroidissement dans cette zone, créant ainsi un écoulement turbulent de gaz.
